**Europäisches Patentamt**

**European Patent Office**

**Office européen des brevets**

(11) Veröffentlichungsnummer: **0 499 843 A1**

# EUROPÄISCHE PATENTANMELDUNG

(21) Anmeldenummer: **92101430.4**

(22) Anmeldetag: **29.01.92**

(51) Int. Cl.5: **B08B 3/08**, //B08B101/08

(30) Priorität: **20.02.91 DE 4105139**

(43) Veröffentlichungstag der Anmeldung:
**26.08.92 Patentblatt 92/35**

(84) Benannte Vertragsstaaten:
**BE DE ES FR IT LU NL**

(71) Anmelder: **SOPURA CHEMIE GmbH**
**Elbestrasse 9**
**W-3570 Stadtallendorf(DE)**

(72) Erfinder: **Rothkirch, Harald**
**Mittelweg 2 a**
**W-2000 Hamburg-Barsbüttel(DE)**
Erfinder: **Herman, Ferdinand**
**Am Bahnhof 5**
**W-3570 Stadtallendorf(DE)**

(74) Vertreter: **Olbricht, Karl Heinrich, Dipl.-Phys.**
**Am Weinberg 15**
**W-3556 Niederweimar(DE)**

(54) **Verfahren und Vorrichtung zum Reinigen von Flaschen.**

(57) Zum Reinigen von Flaschen, die mittels einer Halteeinrichtung gefördert werden, durchlaufen sie Behandlungsabteilungen wie Vorweich-, Heißlaugen- und Klarspülzone. Teilweise mit herausgetragene Lauge wird durch Spülwasserzusatz verdünnt und in die letzte Laugenzone (22) zurückgeführt. Dort findet eine Eigenschaftsmessung statt; abhängig vom Meßergebnis wird die Laugen-Verdünnung wahlweise mit Warm-, Kalt- oder Frischwasser auf vorgegebene Sollwerte gesteuert. Eine Meßeinrichtung (40), z.B. eine Tauchsonde, erfaßt insbesondere den elektrischen Leitwert bzw. die Leitfähigkeit der Lauge, ihren $p_H$-Wert o.dgl. Die Steuer- und Absperrorgane (40, 34) der meßwertabhängig gewählten Behandlungsabteilungen (22; 24; 26, 28,) werden automatisch angesteuert, so daß die Verdünnung bis zu minimalen Rückstandswerten dank der elektrischen bzw. elektronischen Regelung selbsttätig vor sich geht.

Die vorliegende Erfindung bezieht sich auf ein Verfahren zum Reinigen von Flaschen gemäß dem Oberbegriff von Anspruch 1 sowie auf eine Vorrichtung gemäß dem Oberbegriff von Anspruch 6.

Herkömmliche Anlagen zur maschinellen Flaschenreinigung haben verschiedene Behandlungsabteilungen, die nacheinander von den mit einer Halteeinrichtung geförderten Flaschen durchlaufen werden. An Vorweichbäder schließen dabei Tauch- und Spritzbehandlungen mit Wasser und Reinigungslauge an; zur Abkürzung der Verfahrensdauer erfolgen diese Behandlungen zum Teil mit hoher Temperatur. Spülvorgänge sollen das Verschleppen von Rückständen nach Möglichkeit unterbinden.

Ein derartiges System ist in der DE-OS 31 18 647 beschrieben. Hiernach wird der Laugenbehandlungsteil in unterschiedliche Temperatur- und Konzentrationsbereiche aufgeteilt. Einem zentralen, heißen Laugenbad sind zusätzliche Behandlungsbäder vor- und nachgeordnet, um den Laugenverbrauch durch Überschuß-Rückführung zu verringern. Diese zusätzlichen Bäder, sog. Recuperationszonen, sind miteinander leitungsverbunden, so daß ein Strömungsaustausch dazwischen möglich ist, wobei Verunreinigungen in einem Aufbereitungsbehälter aufgefangen oder durch Gegenstrombewegung am Durchlauf gehindert werden sollen.

Bei dem bekannten System wird aus der Heißlaugenzone herausgetragene Lauge im nachstehenden Recuperationsbad durch Spülwasserzusatz verdünnt und das Niveau durch Einspeisen aus anderen Zonen, z. B. mit Warmwasser, aufgefüllt oder bei einem Überschuß dieser zur Niveauregelung im zentralen Heißlaugenbad verwendet. Ein bloßer Volumenausgleich kann jedoch keine ausreichende Verdünnung sicherstellen, weil beim Flaschendurchlauf unweigerlich Restflüssigkeit von Zone zu Zone weitergeschleppt wird, so daß je nach Wasserdurchsatz, Arbeitsgeschwindigkeit und Abtropfmöglichkeiten in den Anlagen bis in den Frischwasserbereich hinein eine gewisse Anreicherung der Laugeninhaltsstoffe erfolgt. Das kann lebensmitteltechnisch bedenklich sein.

Es besteht daher ein Bedürfnis an Abhilfe gegenüber diesen und weiteren Nachteilen. Ein wichtiges Ziel der Erfindung ist es, die maschinelle Flaschenreinigung mit einfachen und wirtschaftlichen Mitteln so zu verbessern, daß eine gleichmäßige Ausspülung bis auf kontrolliert niedrige Rückstandswerte möglich ist, und zwar unabhängig von dem jeweils eingesetzten Anlagetyp, seiner Leistung und der Anzahl der benutzten Bäder.

Zur Lösung dieser Aufgabe sieht die Erfindung die im kennzeichnenden Teil der Ansprüche 1 und 6 angegebenen Maßnahmen vor. Ausgestaltungen des erfindungsgemäßen Verfahrens sind Gegenstand der Ansprüche 2 bis 5; Vorrichtungs-Weiterbildungen sind in den Ansprüchen 7 bis 10 präzisiert.

Nach dem Grundgedanken der Erfindung erfolgt in dem in Durchlaufrichtung letzten Laugenbereich wenigstens eine Eigenschaftsmessung, und abhängig von dem Meßergebnis wird die Laugenverdünnung auf vorgegebene Sollwerte gesteuert. Durch leistungsunabhängige Parameter mit direkter Beeinflussung der letzten Laugenzone erreicht man also einheitliche Spülergebnisse mit konstanten, niedrigen Rückstandswerten. Praktische Großversuche bei der Reinigung von 60.000 bis 80.000 Flaschen pro Stunde haben gezeigt, daß von der Fachwelt befürchtete Nachteile infolge eines teilweisen Verzichts auf Gegenstrom-Spülungen oder durch stärkere Rückkühlung der Gebinde mit eventuell resultierendem Glasbruch nicht auftreten. Vielmehr werden auf überraschend einfache Weise auch bei unterschiedlichem Wasserdurchsatz einstellbare, gleichbleibende Ausspülwerte gewährleistet, ohne daß ein vermehrter Aufwand durch Wärmetauscher, zwischengeschaltete Aufbereitungsbehälter u.dgl. notwendig wäre. Gegenüber der herkömmlichen Technik ist durch die Erfindung eine Herabsetzung der Rückstandswerte um beispielsweise 30 bis 50 % erzielbar.

Eine vorteilhafte Ausgestaltung der Erfindung besteht darin, daß der elektrische Leitwert bzw. die elektrische Leitfähigkeit der Lauge, ihr $p_H$-Wert o.dgl. als Meß- oder Steuergröße erfaßt wird, wozu bevorzugt eine elektrische oder elektronische Meßeinrichtung vorhanden ist, z.B. eine Tauchsonde. Derartige Meßorgane arbeiten zuverlässig und trägheitsarm, so daß sehr schnell eine repräsentative Steuergröße zur Verfügung steht, um einheitliche Spülergebnisse mit niedrigen Rückstandswerten gezielt zu erreichen.

Nach einer anderen Weiterbildung der Erfindung erfolgt die Laugen-Verdünnung wahlweise mit Warmwasser, Kaltwasser oder Frischwasser oder mit einer Mischung aus diesen Komponenten, wozu entsprechende Strömungsverbindungen mit dem letzten Laugenbereich herstellbar sind. Durch die Steuerung ist gewährleistet, daß sich in den verschiedenen Ausspülzonen auch bei unterschiedlichem Wasserdurchsatz einstellbare Verhältnisse konstant ergeben. Gegenstrom-Spülungen sind dabei nicht erforderlich.

Ein wichtiges Merkmal der Erfindung besteht darin, daß die Verdünnung automatisch vor sich geht, insbesondere mittels elektrischer oder elektronischer Regelung, indem die Steuer- und Absperrorgane der meßwertabhängig gewählten Behandlungsabteilungen automatisch angesteuert werden. Je nach der vorgegebenen Endkonzentration erfolgt also in der betreffenden Zone das Öffnen bzw. Schließen der Steuer- und Absperrorgane in der Weise, daß die Istwerte die Soll-Vorgabe zumindest erreichen.

Noch eine weitere Ausgestaltung der Erfindung sieht vor, daß in an sich bekannter Weise überschüssige Rückführ-Flüssigkeit in die Vorweichzone oder in einen weiteren Behandlungsbereich umgeleitet wird, beispielsweise zum Reinigen von Flaschen- und Kunststoffkästen, wofür zumindest in der letzten Laugenzone ein Überlauf vorhanden sein kann, von dem eine Strömungsverbindung zu einer der genannten anderen Zonen herstellbar ist. Dadurch erzielt man eine Verbesserung der Entsorgung und eine optimale Ausnutzung der Reinigungsflüssigkeit, etwa durch Besprühen des Leergutes vor der Reinigungsanlage.

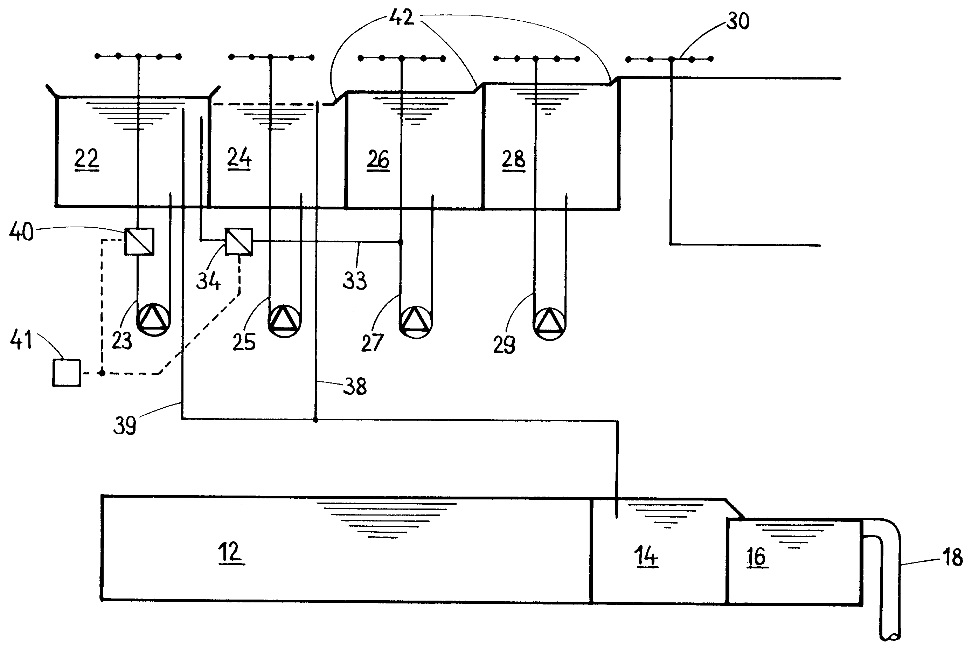

Weitere Merkmale, Einzelheiten und Vorteile der Erfindung ergeben sich aus der folgenden Beschreibung eines Ausführungsbeispiels anhand der Zeichnung. Diese zeigt in schematischer Darstellung eine insgesamt mit 10 bezeichnete Reinigungsanlage, nämlich zum Reinigen von Flaschen. Sie weist wenigstens eine Laugenzone 12 auf, der zumindest eine Behandlungsstation verordnet ist. Im gezeichneten Beispiel sind zwei Vorweichen 14, 16 vorgesehen. Hier befindet sich auch ein zentraler Abfluß 18.

Die (nicht dargestellten) zu reinigenden Gebinde bzw. Flaschen tauchen durch zumindest eine der Vorweichzonen 14, 16, wo auch eine Spritzlaugen-Behandlung stattfinden kann. Sie gehen dann über in eines der Laugenbecken 12, die z.B. Natriumhydroxid-Lösungen mit Additiven enthalten. Es können weitere Laugenzonen nachgeschaltet sein. Die Zone 22 bezeichnet hier die letzte Laugenbehandlungszone. Danach beginnt die Ausspülung in mehreren Zonen, z.B. einer Neutralisier- oder Zwischenspülzone 24. An die Ausspülungen in einer Warmwasserzone 26 sowie in einer Kaltwasserzone 28 schließt eine Spritzung in einer Frischwasserzone 30 an. Diese Frischwasserspritzung dient zugleich zur Speisung der vorgeschalteten Zonen 28, 26, 24 und vielfach auch zum Niveauausgleich in den Laugenbehandlungszonen 22 und 12. Jeder dieser Zonen ist eine Umpumpleitung zugeordnet, bezeichnet mit 29, 27, 25 bzw. 23.

Im dargestellten Beispiel ist zwischen der Warmwasserzone 26 und der letzten Laugenzone 22 eine Steuerleitung 33 mit einem Absperrorgan 34 vorgesehen, über das Verdünnungsflüssigkeit in die letzte Laugenzone 22 eingespeist werden kann. In der Zone 22 bzw. ihrer Umpumpleitung 23 ist ein Meßorgan 40 vorhanden, welches in elektrischer Verbindung mit einem Schaltschrank oder Steuerpult 41 das Absperrorgan 34, z.B. ein Ventil, steuert. Dieses öffnet bzw. schließt, um je nach eingestelltem Sollwert der Reinigungsmittel-Konzentration und je nach Wasserverbrauch die Zufuhr von Verdünnungs-Flüssigkeit so zu bewirken, daß ein Gleichgewicht zwischen der Laugenverschleppung in die Zone 24 und dem Spülwasservolumen erreicht wird. Man erzielt so dank des Meßorgans 40 ebenso zuverlässig wie gleichmäßig eine niedrige Endkonzentration an Reinigungsrückständen.

Von den Zonen 24, 26 gehen zweckmäßig Überströmleitungen 38, 39 zu der Vorweiche 14. Dadurch kann in an sich bekannter Weise überschüssige Verdünnungs-Flüssigkeit in der Vorweiche und im Teilstrom zur Reinigung von Flaschen- bzw. Kunststoffkästen o.dgl. verwendet werden.

Die Anlage 10 kann ferner so ausgebildet sein, daß jeweils zu benachbarten Zonen hin ein Überlauf 42 vorhanden ist, um einen Pegelausgleich zu ermöglichen und einen Durchfluß zu bewirken. Auch andere Rohrführungen können für einen solchen Durchfluß vorgesehen sein.

Die Erfindung ist nicht auf das dargestellte Ausführungsbeispiel beschränkt. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Legende

| D | Durchlaufrichtung |
|---|---|
| 10 | Reinigungsanlage |
| 12 | Laugenbecken |
| 14,16 | Vorweichzonen |
| 18 | Abfluß |
| 20 | Verbindung(s-Tanks) |
| 22 | letzte Laugenzone |
| 23,25,27,29 | Umpumpleitungen |
| 24 | Neutralisier-/Zwischenspülzone |
| 26 | Warmwasserzone |
| 28 | Kaltwasserzone |
| 30 | Frischwasserzufuhr |
| 33 | Steuerleitung |
| 34 | Absperrorgan |
| 38,39 | Überströmleitungen |
| 40 | Meßorgan |
| 41 | Schaltschrank/Steuerpult |
| 42 | Überlauf |

**Patentansprüche**

1. Verfahren zum Reinigen von Flaschen in einer Anzahl von Behandlungsabteilungen wie Vorweich-, Heißlaugen- und Klarspülzone, die von den mittels einer Halteeinrichtung geförderten Flaschen nacheinander durchlaufen werden, wobei teilweise aus der Laugenzone mit herausgetragene Lauge durch Spülwasserzusatz verdünnt und in die Laugenzone zurückgeführt wird, dadurch **gekennzeichnet**, daß in dem in Durchlaufrichtung letzten Laugenbereich wenigstens eine Eigenschaftsmessung stattfindet und abhängig vom Meßergebnis eine Laugen-Verdünnung auf vorgegebene Sollwerte gesteuert wird.

2.  Verfahren nach Anspruch 1, dadurch **gekennzeichnet**, daß der elektrische Leitwert bzw. die elektrische Leitfähigkeit der Lauge, ihr $p_H$-Wert o.dgl. als Meß- und Steuergröße erfaßt wird.

3.  Verfahren nach Anspruch 1 oder 2, dadurch **gekennzeichnet**, daß die Laugen-Verdünnung wahlweise mit Warmwasser, Kaltwasser oder Frischwasser oder mit einer Mischung aus diesen Komponenten erfolgt.

4.  Verfahren nach einem der Ansprüche 1 bis 3, dadurch **gekennzeichnet,** daß die Verdünnung automatisch vor sich geht, insbesondere mittels elektrischer oder elektronischer Regelung.

5.  Verfahren nach einem der Ansprüche 1 bis 4, dadurch **gekennzeichnet,** daß in an sich bekannter Weise überschüssige Rückführ-Flüssigkeit in die Vorweichzone oder in eine weitere Behandlungszone umgeleitet wird, z.B. zum Reinigen von Flaschenkästen oder zur Faßaußenreinigung.

6.  Vorrichtung zum Reinigen von Flaschen in einer Anzahl von Behandlungsabteilungen wie Vorweich-, Heißlaugen- und Klarspülzone (14, 16; 22, 24; 26), durch welche die Flaschen mittels einer Halteeinrichtung nacheinander kontinuierlich förderbar sind, mit einer Einrichtung (33, 34) zum Verdünnen von verschleppter Lauge und Rückführen in die Laugenzone (24), insbesondere zum Durchführen eines Verfahrens nach einem der Ansprüche 1 bis 5, dadurch **gekennzeichnet,** daß der in Durchlaufrichtung (D) letzte Laugenbereich (24) wenigstens eine Einrichtung (40) zum Messen von Laugen-Eigenschaften aufweist und daß die Laugen-Verdünnung abhängig vom Meßergebnis auf vorgegebene Sollwerte steuerbar ist.

7.  Vorrichtung nach Anspruch 6, dadurch **gekennzeichnet,** daß eine elektrische oder elektronische Meßeinrichtung (40) vorhanden ist, z.B. eine Tauchsonde zum Erfassen des elektrischen Leitwerts bzw. der elektrischen Leitfähigkeit der Lauge, ihres $p_H$-Werts o.dgl.

8.  Vorrichtung nach Anspruch 6 oder 7, dadurch **gekennzeichnet,** daß der letzte Laugenbereich (24) wahlweise mit der Warmwasser-, der Kaltwasser- oder der Frischwasserzone bzw. Frischwasserspritzung (26; 28; 30; 32) oder mit zwei dieser Zonen verbindbar ist.

9.  Vorrichtung nach einem der Ansprüche 6 bis 8, dadurch **gekennzeichnet,** daß zur Laugen-Verdünnung Steuer- und Absperrorgane (40, 34) der meßwertabhängig gewählten Behandlungsabteilungen (z. B. 22 und nachfolgende Zonen) automatisch ansteuerbar sind.

10. Vorrichtung nach einem der Ansprüche 6 bis 9, dadurch **gekennzeichnet,** daß in der Laugenzone (22) ein Überströmleitungen (38, 39) vorhanden sind, durch die eine Strömungsverbindung von Behandlungszonen (22, 24) zu einer Vorweichzone (14) oder im Teilstrom z. B. zum Vorweichen herstellbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 391 152 (SEITZ-WERKE G.M.B.H.) | 1,5,6 | B08B3/08 |
| Y | * das ganze Dokument * | 2-4,7-10 | //B08B101:08 |
| | & DE-A-2 723 004 | | |
| | --- | | |
| Y | US-A-4 733 798 (BRADY ET AL) | 2-4,7-9 | |
| A | * Spalte 4, Zeile 64 - Spalte 15, Zeile 42; Abbildungen 1-5C * | 1,6 | |
| | --- | | |
| Y | EP-A-0 406 682 (HENKEL KOMMADITGESELLSCHAFT AUF AKTIEN) | 10 | |
| A | * das ganze Dokument * | 1-9 | |
| | --- | | |
| A | DE-A-2 810 526 (V.E.B. KOMBINAT IMPULSA) | 1-3,6-8 | |
| | * das ganze Dokument * | | |
| | --- | | |
| A | DE-A-2 452 313 (VON RÜLING) | 1,2,7,8 | |
| | * Seite 8, Absatz 1 - Seite 11, Absatz 1; Abbildung 1 * | | |
| | ----- | | **RECHERCHIERTE SACHGEBIETE (Int. Cl.5)** |
| | | | B67C B08B C23G A47L |

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | DESENA Y HERNANDOREN |